# EUROPÄISCHE PATENTSCHRIFT

(11) **EP 4 093 901 B1**
(45) Veröffentlichungstag und Bekanntmachung des Hinweises auf die Patenterteilung: **27.12.2023**
(21) Anmeldenummer: 21715146.3
(22) Anmeldetag: 11.03.2021
(51) Int. Cl.: C25B 1/04, C25B 1/23, C25B 3/03, C25B 3/25, C25B 3/26, C25B 9/23, C25B 9/77, C25B 11/031

(54) **VORRICHTUNG UND VERFAHREN ZUR KOHLENSTOFFDIOXID- ODER KOHLENSTOFFMONOXID-ELEKTROLYSE**
DEVICE AND METHOD FOR CARBON DIOXIDE ELECTROLYSIS OR CARBON MONOXIDE ELECTROLYSIS
DISPOSITIF ET PROCÉDÉ D'ÉLECTROLYSE DE DIOXYDE DE CARBONE OU D'ÉLECTROLYSE DE MONOXYDE DE CARBONE

(30) Priorität: 01.04.2020 DE 102020204224
(43) Veröffentlichungstag der Anmeldung: 30.11.2022
(73) Patentinhaber: Siemens Energy Global GmbH & Co. KG, 81739 München (DE)
(72) Erfinder: MAGORI, Erhard, 85622 Feldkirchen (DE); PASTUSIAK, Remigiusz, 81549 München (DE); TAWIL, Angelika, 80935 München (DE); WIESNER-FLEISCHER, Kerstin, 85635 Höhenkirchen-Siegertsbrunn (DE)
(86) Internationale Anmeldenummer: PCT/EP2021/056136
(87) Internationale Veröffentlichungsnummer: WO 2021/197787

(56) Entgegenhaltungen:
- EP-A1- 2 709 959
- EP-A2- 0 082 643
- WO-A1-2017/192787
- WO-A1-2019/011577
- WO-A1-2019/096540
- GB-A- 1 257 934
- GB-A- 2 348 047
- JP-A- H07 220 727
- JP-A- 2003 308 848
- US-A- 4 602 984
- US-A- 4 923 583
- US-A1- 2018 006 315
- US-A1- 2018 258 542
- US-A1- 2019 085 473

## Beschreibung

Die Erfindung betrifft eine anodenseitige Halbzelle für eine elektrochemische Zelle einer Elektrolyseeinrichtung zur Kohlenstoffdioxidelektrolyse und/oder zur Kohlenstoffmonoxid-Elektrolyse. Darüber hinaus betrifft die Erfindung eine elektrochemische Zelle für eine Elektrolyseeinrichtung zur Kohlenstoffdioxid-Elektrolyse und/oder zur Kohlenstoffmonoxid-Elektrolyse, mit einem Kathodenbereich, der einen elektrischen Kathodenanschluss, eine Gasdiffusionselektrode, einen ersten Zuführanschluss zum Zuführen von Kohlenstoffdioxid und einen ersten Ableitanschluss zum Ableiten von beim bestimmungsgemäßen Betrieb der elektrochemischen Zelle zumindest teilweise gebildeten Elektrolysestoffen aufweist, einem mittels eines Separators vom Kathodenbereich getrennt ausgebildeten Anodenbereich, der einen elektrischen Anodenanschluss, eine Anodenplatte, einen zweiten Zuführanschluss zum Zuführen eines protonenabgebenden Stoffs und einen zweiten Ableitanschluss zum Ableiten von beim bestimmungsgemäßen Betrieb der elektrochemischen Zelle zumindest teilweise gebildeten Elektrolysereststoffen aufweist, wobei der Kathodenanschluss und der Anodenanschluss ausgebildet sind, mit entsprechenden elektrischen Anschlüssen einer eine elektrische Elektrolysespannung bereitstellenden Energiequelle elektrisch gekoppelt zu werden. Weiterhin betrifft die Erfindung eine Elektrolyseeinrichtung zur Kohlenstoffdioxid-Elektrolyse und/oder zur Kohlenstoffmonoxid-Elektrolyse. Schließlich betrifft die Erfindung auch ein Verfahren zum Herstellen einer anodenseitigen Halbzelle für eine elektrochemische Zelle einer Elektrolyseeinrichtung zur Kohlenstoffdioxid-Elektrolyse und/oder zur Kohlenstoffmonoxid-Elektrolyse.

Anodenseitige Zellen, elektrochemische Zellen, Elektrolyseeinrichtungen zur Kohlenstoffdioxid-Elektrolyse und/oder zur Kohlenstoffmonoxid-Elektrolyse sowie Verfahren zur Herstellung von anodenseitigen Zellen sind dem Grunde nach im Stand der Technik bekannt, sodass es eines gesonderten druckschriftlichen Nachweises hierfür nicht bedarf. Elektrochemische Zellen sowie hieraus gebildete Elektrolyseeinrichtungen dienen dazu, Kohlenstoffdioxid zumindest teilweise in Kohlenstoffmonoxid und/oder auch in andere Kohlenwasserstoffe umzuwandeln. Neben Kohlenstoffdioxid kann alternativ oder ergänzend auch Kohlenstoffmonoxid genutzt werden, um die anderen Kohlenwasserstoffe zumindest teilweise zu erzeugen.

Kohlenstoffdioxid ist ein Stoff, der bei der Nutzung, insbesondere von fossilen Brennstoffen, entsteht und in großen Mengen in die Atmosphäre freigesetzt wird. Kohlenstoffdioxid ist ein Treibhausgas und daher in der Atmosphäre ein unerwünschter Stoff. Die Erfindung befasst sich mit der Frage, Kohlenstoffdioxid für einen weiten Bereich der chemischen Industrie nutzbar zu machen. Kohlenstoffmonoxid ist dagegen ein Ausgangsstoff für die chemische Industrie und kann für die Herstellung einer Vielzahl von chemischen Produkten genutzt werden. Durch die Erzeugung von Kohlenstoffmonoxid aus Kohlenstoffdioxid kann dieses Ziel verbessert, wenn nicht sogar erst erreicht werden. Darüber hinaus können im Rahmen der Kohlenstoffdioxid-Elektrolyse auch andere Kohlenwasserstoffe, beispielsweise Methan, Alkohole und/oder dergleichen hergestellt werden. Diese anderen Stoffe können auch durch eine Elektrolyse von Kohlenstoffmonoxid gewonnen werden.

In der Praxis hat sich gezeigt, dass die Herstellung von Kohlenstoffmonoxid beziehungsweise der anderen Kohlenwasserstoffe aus Kohlenstoffdioxid beziehungsweise Kohlenstoffmonoxid nicht nur einen großen Aufwand erfordert, sondern darüber hinaus auch mit Problemen verbunden ist. Beispielsweise in Bezug auf die Kohlenstoffdioxid-Elektrolyse ist es nämlich erforderlich, dass das Kohlenstoffdioxid durch Reduktion zumindest teilweise in Kohlenstoffmonoxid umgewandelt wird. Zu diesem Zweck ist es erforderlich, eine für die Reduktion geeignete Umgebung bereitzustellen sowie einen Stoff, der durch seine Oxidation die Reduktion des Kohlenstoffdioxids erlaubt.

Bei vielen Anwendungen ist es daher üblich, innerhalb der elektrochemischen Zelle eine ionenleitende Lösung oder einen wasserbasierten Elektrolyten zu nutzen. In einem anodenseitigen Bereich der elektrochemischen Zelle wird die ionenleitende Lösung oder der wasserbasierte Elektrolyt aufgespalten, sodass Protonen bereitgestellt werden können und Sauerstoff abgegeben wird. Das Wasser der ionenleitenden Lösung oder des wasserbasierten Elektrolyten stellt hier also einen protonenabgebenden Stoff dar. Dieser Reaktionsteil findet in der Regel im Bereich der Anode beziehungsweise Anodenbereich statt.

Die Protonen können dann nach Passieren eines geeigneten Separators, der vorzugsweise ausschließlich für Protonen durchlässig ist, in einem Kathodenbereich der elektrochemischen Zelle für die Reduktion des Kohlenstoffdioxids zur Verfügung gestellt werden. Durch eine Reaktion im Kathodenbereich wird das Kohlenstoffdioxid dann zumindest teilweise aufgespalten, wodurch Kohlenstoffmonoxid erzeugt wird. Darüber hinaus kann der freigewordene Sauerstoff dann zum Beispiel mit den Protonen zusammen Wasser bilden.

Die elektrochemische Zelle weist in der Regel zumindest einen Kathodenbereich und einem vom Kathodenbereich mittels des Separators getrennt ausgebildeten Anodenbereich auf. Zur Durchführung der elektrochemischen Reaktion in der elektrochemischen Zelle sind im Anodenbereich eine Anode und im Kathodenbereich eine Kathode angeordnet, die mit einem geeigneten elektrischen Potential beaufschlagt sind. Darüber hinaus ist zumindest im Anodenbereich ein Katalysator angeordnet, der die gewünschte Reaktion im Anodenbereich unterstützt beziehungsweise ermöglicht.

Für die Durchführung der gewünschten chemischen Reaktion in der elektrochemischen Zelle können die gewünschten Stoffe sowohl zumindest teilweise flüssig als auch zumindest teilweise gasförmig vorliegen. Wird zumindest das Kohlenstoffdioxid gasförmig zugeführt, kann die Kathode zum Beispiel eine Gasdiffusionselektrode aufweisen. Die Gasdiffusionselektrode erlaubt es, einen festen, einen flüssigen und einen gasförmigen Stoff miteinander in Verbindung zu bringen, sodass die gewünschte elektrochemische Reaktion erreicht werden kann. Eine Gasdiffusionselektrode ist zum Beispiel aus der europäischen Patentanmeldung EP 3 757 253 A1 bekannt.

Die Reaktion in der elektrochemischen Zelle nutzt vorzugsweise einen Elektrolyten. Der Elektrolyt kann zum Beispiel durch eine vorzugsweise wässrige Salzlösung gebildet sein. Wird die Salzlösung als Elektrolyt eingesetzt, kann der Elektrolyt anodenseitig und kathodenseitig gleich sein. Der Elektrolyt kann daher aus einem einzigen Reservoir bereitgestellt sein. Ein solcher Elektrolyt wird gelegentlich auch Monolyt genannt. Darüber hinaus besteht natürlich auch die Möglichkeit, im Anodenbereich und im Kathodenbereich voneinander unterschiedliche Elektrolyten zu benutzten, wobei der Kathodenbereich dann einen Katholyten und der Anodenbereich einen Anolyten aufweist. Im Anodenbereich kann der Anolyt durch Wasser gebildet sein, wohingegen der Katholyt im Kathodenbereich durch einen Katholyten in Form einer Salzlösung gebildet sein kann. Darüber hinaus sind weitere Elektrolytkonstellationen denkbar.

Bei gattungsgemäßen Elektrolyseeinrichtungen erweist es sich, insbesondere in Bezug auf die Anode, als problematisch, über die vorgesehene Reaktionsfläche verteilt eine gleichmäßige Stromdichte zu erreichen, damit eine gute Wirkung der elektrochemischen Zelle erreicht werden kann. Als problematisch erweisen sich dabei insbesondere Stoffe, die zugleich auch als Katalysator dienen und eine elektrische Leitfähigkeit zur Verfügung stellen sollen. Darüber hinaus hat es sich als problematisch erwiesen, insbesondere auch anodenseitig, die unterschiedlichen Bauteile in einer vorgegebenen Position anzuordnen und in vorgegebener Weise miteinander zu verbinden. Dies hat eine aufwendige Montage und Konstruktion zur Folge. Die Zuverlässigkeit kann sowohl bei der Herstellung der elektrochemischen Zelle als auch im bestimmungsgemäßen Betrieb beeinträchtigt sein.

Bei der Elektrolyse von Kohlenstoffmonoxid können sich ähnliche Probleme ergeben.

Darüber hinaus offenbart die WO 2019/096540 A1 eine ethylenselektive Elektrode mit gemischt-valentem Cu₄O₃-Katalysator. Weiterhin offenbart die WO 2019/011577 A1 eine Membran gekoppelte Kathode zur Reduktion von Kohlendioxid in säurebasierten Elektrolyten ohne mobile Kationen. Schließlich offenbart die WO 2017/192787 A1 einen Reaktor mit verbesserter Architektur für die elektrochemische Reaktion von CO₂, CO und anderen chemischen Verbindungen. US 2018/0258542 A1 offenbart ein künstliches Photosynthesemodul. US 2019/0085473 A1 offenbart einen Katalysatorkörper für die Kohlendioxidreduktion.

Der Erfindung liegt die Aufgabe zugrunde, eine gattungsgemäße anodenseitige Halbzelle, eine elektrochemische Zelle, eine gattungsgemäße Elektrolyseeinrichtung sowie auch ein Verfahren zu deren Herstellung zu verbessern, sodass die Homogenität der Stromdichte im Bereich der Anode verbessert und die Herstellung oder die Konstruktion der elektrochemischen Zelle, insbesondere der anodenseitigen Halbzelle, verbessert werden kann.

Als Lösung werden mit der Erfindung eine anodenseitige Halbzelle, eine elektrochemische Zelle, eine Elektrolyseeinrichtung sowie ein Verfahren zu deren Herstellung gemäß den unabhängigen Ansprüchen 1, 11, 13 bzw. 14 vorgeschlagen.

Vorteilhafte Weiterbildungen ergeben sich durch Merkmale der abhängigen Ansprüche.

In Bezug auf eine gattungsgemäße anodenseitige Halbzelle wird insbesondere vorgeschlagen, dass die anodenseitige Halbzelle einen als Membran ausgebildeten Separator, der eine anodenseitige Separatoroberfläche und eine der anodenseitigen Separatoroberfläche gegenüberliegenden kathodenseitigen Separatoroberfläche aufweist, eine Katalysatorschicht, welche eine erste Katalysatoroberfläche und eine der ersten Katalysatoroberfläche gegenüberliegende zweite Katalysatoroberfläche aufweist, wobei die erste Katalysatoroberfläche der anodenseitigen Separatoroberfläche zugewandt ist, und eine fluiddurchlässige Anodenplatte aufweist, die eine erste Anodenoberfläche aufweist, wobei die erste Anodenoberfläche der zweiten Katalysatoroberfläche zugewandt ist.

Weiterhin wird in Bezug auf eine gattungsgemäße elektrochemische Zelle insbesondere vorgeschlagen, dass der Anodenbereich und der Separator als anodenseitige Halbzelle gemäß der Erfindung ausgebildet sind.

In Bezug auf eine gattungsgemäße Elektrolyseeinrichtung wird insbesondere vorgeschlagen, dass die elektrochemischen Zellen gemäß der Erfindung ausgebildet sind, wobei die elektrochemischen Zellen räumlich unmittelbar aneinander angrenzend angeordnet sind.

In Bezug auf ein gattungsgemäßes Verfahren wird mit der Erfindung insbesondere vorgeschlagen, dass dieses die Schritte aufweist:
- Anordnen einer anodenseitigen Separatoroberfläche eines als Membran ausgebildeten Separators, der eine der anodenseitigen Separatoroberfläche gegenüberliegende kathodenseitige Separatoroberfläche aufweist, an einer ersten Katalysatoroberfläche einer Katalysatorschicht, welche Katalysatorschicht eine der ersten Katalysatoroberfläche gegenüberliegende zweite Katalysatoroberfläche aufweist, und
- Anordnen einer ersten Anodenoberfläche einer fluiddurchlässigen Anodenplatte an der zweiten Katalysatoroberfläche.

Es ist ein Gedanke der Erfindung, die elektrochemische Zelle modular zu konstruieren, sodass nicht nur die Wirksamkeit sondern auch die Zuverlässigkeit und die Fertigungstechnik verbessert werden können. Darüber hinaus kann ein modularer Aufbau erreicht werden, der es erlaubt, anodenseitig die elektrische Kopplung in Bezug auf den elektrischen Anodenanschluss zu verbessern, sodass insgesamt eine verbesserte Homogenität in Bezug auf die elektrische Stromdichte der Anode erreicht werden kann. Insgesamt erlaubt es die Erfindung, einerseits die Montage zu vereinfachen und zugleich auch die Zuverlässigkeit bei der Montage zu erhöhen und andererseits einen Wirkungsgrad, insbesondere einen Faraday Wirkungsgrad, sowie auch die Zuverlässigkeit im bestimmungsgemäßen Betrieb zu verbessern. Dadurch kann auch die Effizienz in Bezug auf die Kohlenstoffdioxid-Elektrolyse insgesamt verbessert werden.

Die anodenseitige Halbzelle ist vorzugsweise eine Baueinheit, die ein Teil eines Aufbaus, insbesondere eines modularen Aufbaus der elektrochemischen Zelle darstellt. Vorzugsweise handelt es sich bei der anodenseitigen Halbzelle um eine separat handhabbare Baugruppe. Die anodenseitige Halbzelle stellt den Anodenraum und den Separator bereit und kann dadurch auf einfache Weise mit den weiteren Bauteilen beziehungsweise Bauelementen der elektrochemischen Zelle verbunden werden. Dabei erlaubt es die Konstruktion der anodenseitigen Halbzelle, eine fertig geprüfte Baueinheit für die Fertigstellung der elektrochemischen Zelle bereitzustellen, sodass die Montage insgesamt vereinfacht werden kann. Darüber hinaus kann die Zuverlässigkeit im Bereich der Montage erhöht werden. Zumindest die anodenseitige Halbzelle weist vorzugsweise einen gestapelten Aufbau auf. Insbesondere sind deren Elemente unmittelbar aufeinanderfolgend angeordnet. Der gestapelte Aufbau kann mittels mechanischer Verbindungselemente zumindest teilweise fixiert sein. Die Verbindung kann lösbar oder auch unlösbar ausgebildet sein. Ferner kann die anodenseitige Halbzelle ein eigenes Gehäuse oder Teilgehäuse aufweisen. Das Gehäuse beziehungsweise Teilgehäuse kann zumindest teilweise als Verbindungselement dienen. Darüber hinaus können als Verbindungselemente Klammern, Clipse, Schrauben, Nieten und/oder dergleichen vorgesehen sein. Als Verbindungselemente kann auch ein Klebstoff, ein Lot und/oder dergleichen vorgesehen sein. Diese Konstruktionsmerkmale können natürlich gleichermaßen auch für die kathodenseitige Halbzelle oder auch für die elektrochemische Zelle, die die anodenseitige Halbzelle und die kathodenseitige Halbzelle aufweist, vorgesehen sein.

Vorzugsweise kann auch eine kathodenseitige Halbzelle vorgesehen sein, die die entsprechenden Elemente des Kathodenraums umfasst. Zur Fertigstellung der elektrochemischen Zelle brauchen dann lediglich wenigstens diese zwei Elemente, nämlich die anodenseitige Halbzelle und die kathodenseitige Halbzelle miteinander kombiniert angeordnet zu werden, um die elektrochemische Zelle zu bilden. Je nach Konstruktion und Bedarf können jedoch auch zusätzliche Elemente vorgesehen sein.

Insbesondere kann natürlich vorgesehen sein, dass die elektrochemische Zelle ein Gehäuse aufweist, in dem zumindest die anodenseitige Halbzelle angeordnet ist. Dies kann auch für die kathodenseitige Halbzelle vorgesehen sein. Zumindest kathodenseitig kann jedoch auch vorgesehen sein, dass einige der Elemente beziehungsweise Bauteile der anodenseitigen Halbzelle als einzeln handhabbare Elemente in vorgegebener Weise angeordnet werden. Sie können dann mit mechanischen Verbindungselementen miteinander verbunden werden, um die gewünschte Anordnung zu erhalten beziehungsweise zu fixieren. Die Verbindungselemente können zum Beispiel Klemmringe, Schraubverbindungen, Klippverbindungen und/oder dergleichen sein.

Die elektrochemische Zelle stellt einen Reaktionsbereich bereit, der es erlaubt, das Kohlenstoffdioxid, welches vorzugsweise gasförmig zugeführt wird, zumindest teilweise in Kohlenstoffmonoxid umzuwandeln. Das Kohlenstoffdioxid kann jedoch auch mittels eines Lösungsmittels in flüssiger Form zugeführt werden. Das Lösungsmittel kann zugleich einen Elektrolyten der elektrochemischen Zelle, zumindest jedoch einen Katholyten bilden.

Die elektrochemische Zelle kann zum Beispiel im Kathodenbereich einen elektrischen Kathodenanschluss aufweisen, der es erlaubt, eine elektrische Verbindung zu der elektrischen Energiequelle herzustellen, die den Kathodenanschluss mit einem elektrischen Kathodenpotential beaufschlagen kann. Das elektrische Kathodenpotential ist verschieden vom elektrischen Anodenpotential und vorzugsweise derart gewählt, dass die gewünschte elektrochemische Reaktion erreicht werden kann. Die elektrische Potentialdifferenz zwischen dem elektrischen Anodenpotential und dem elektrischen Kathodenpotential beträgt beispielsweise etwa 7 V, vorzugsweise weniger als etwa 7 V, besonders bevorzugt 5 V oder weniger, insbesondere etwa 3,8 V.

Der Kathodenbereich umfasst ferner eine Gasdiffusionselektrode sowie einen ersten Zuführanschluss zum Zuführen von Kohlenstoffdioxid, insbesondere in Form eines Gases, und einen ersten Ableitanschluss zum Ableiten von beim bestimmungsgemä-ßen Betrieb der elektrochemischen Zelle zumindest teilweise gebildeten Elektrolysestoffen. Die Elektrolysestoffe umfassen insbesondere das durch die bestimmungsgemäße Elektrolyse erzeugte Kohlenstoffmonoxid, welches ebenfalls vorzugsweise als Gas vorliegt. Darüber hinaus können die Elektrolysestoffe auch Reste von Kohlenstoffdioxid umfassen, welches im bestimmungsgemäßen Betrieb der elektrochemischen Zellen nicht umgewandelt wurde. Schließlich können weitere Stoffe als Elektrolysestoffe vorhanden sein, beispielsweise Wasser, insbesondere in Form von Wasserdampf, Wasserstoff und/oder dergleichen. Je nach Bedarf können die Elektrolysestoffe durch Separierverfahren voneinander getrennt werden, sodass insbesondere das durch den bestimmungsgemäßen Betrieb der elektrochemischen Zelle erzeugte Kohlenstoffmonoxid von den weiteren Stoffen getrennt werden kann.

Der Separator ist vorzugsweise ein Separator, der für Protonen durchlässig ist. Vorzugsweise ist der Separator ausschließlich für Protonen durchlässig, beispielsweise gebildet aus einem Stoff wie Nafion oder dergleichen. Der Separator kann zum Beispiel auch eine Ion-leitende Membran, ein poröser Werkstoff, der Flüssigkeiten durchlässt, wie beispielsweise eine Fritte oder poröses Material auf einem Trägergitter, polymergebundenes poröses Material und/oder dergleichen aufweisen, wobei die vorgenannten Werkstoffe beispielsweise auch als Träger dienen können. Der Separator kann als dünne Folie beziehungsweise Schicht, insbesondere nach Art einer Membran, gebildet sein. Darüber hinaus kann der Separator auch mit wenigstens einem der benachbarten Elemente der elektrochemischen Zelle einstückig ausgebildet sein, insbesondere mit der Katalysatorschicht.

Die Katalysatorschicht ist eine Schicht, die sich zumindest teilweise parallel zum Separator erstreckt. Vorzugsweise sind die Katalysatorschicht und eine anodenseitige Separatoroberfläche miteinander verbunden und bilden eine einstückige Einheit. Die Katalysatorschicht umfasst einen geeigneten Stoff, der es erlaubt, aus einem dem Anodenbereich über einen zweiten Zuführanschluss zugeführten protonenabgebenden Stoff Protonen freizusetzen und über den Separator dem Kathodenbereich zuführen zu können. Der protonenabgebende Stoff kann zum Beispiel Wasser, eine Salzlösung, und/oder dergleichen sein. Der Anodenbereich kann darüber hinaus einen zweiten Ableitanschluss zum Ableiten von beim bestimmungsgemäßen Betrieb der elektrochemischen Zelle zumindest teilweise gebildeten Elektrolysereststoffen aufweisen. Ist der Elektrolyt beziehungsweise Anolyt durch Wasser gebildet, kann der Reststoff zum Beispiel Sauerstoff, insbesondere in Gasform, umfassen.

Darüber hinaus kann der Anodenbereich einen elektrischen Anodenanschluss aufweisen, der entsprechend wie der Kathodenanschluss des Kathodenbereichs mit der elektrischen Energiequelle elektrisch gekoppelt werden kann, sodass die Anode des Anodenbereichs mit dem elektrischen Anodenpotential beaufschlagt werden kann.

Der Separator weist eine anodenseitige Separatoroberfläche und eine der anodenseitigen Separatoroberfläche gegenüberliegende kathodenseitige Separatoroberfläche auf. Ebenso weist die Katalysatorschicht eine erste Katalysatoroberfläche und eine der ersten Katalysatoroberfläche gegenüberliegende zweite Katalysatoroberfläche auf. Die erste Katalysatoroberfläche ist der anodenseitigen Separatoroberfläche zugewandt. Zugewandt bedeutet unter anderem, dass die erste Katalysatoroberfläche und die anodenseitige Separatoroberfläche einander gegenüberliegend angeordnet sind. Vorzugsweise können diese Oberflächen sich kontaktieren. Besonders bevorzugt sind diese beiden Oberflächen miteinander verbunden, insbesondere fest miteinander verbunden, sodass sie beispielsweise eine integrale Baueinheit bilden können. Insbesondere kann die Katalysatorschicht nach Art einer Beschichtung an der anodenseitigen Separatoroberfläche angeordnet sein. Dies kann die Herstellung der elektrochemischen Zelle sowie auch der anodenseitigen Halbzelle verbessern und auch die Zuverlässigkeit im bestimmungsgemäßen Betrieb erhöhen.

Die anodenseitige Halbzelle umfasst ferner die fluiddurchlässige Anodenplatte, die eine erste Anodenoberfläche und eine der ersten Anodenoberfläche gegenüberliegende zweite Anodenoberfläche aufweist. Die erste Anodenoberfläche ist der zweiten Katalysatoroberfläche zugewandt. Auch hier können die beiden Oberflächen gegenüberliegend zueinander angeordnet sein. Vorzugsweise sind diese beiden Oberflächen miteinander verbunden, beispielsweise fest miteinander verbunden. Die Anodenplatte ist vorzugsweise aus einem elektrisch gut leitfähigen Material, beispielsweise Titan oder einer Titanlegierung oder dergleichen. Die Anodenplatte ist darüber hinaus vorzugsweise derart ausgebildet, dass sie die Zuführung des Elektrolyten, insbesondere des Anolyten zur Katalysatoroberfläche, und zwar zur zweiten Katalysatoroberfläche erlaubt. Das Anolyt kann - wie auch der Katholyt - flüssig und/oder gasförmig sein. Darüber hinaus kann durch den Aufbau der Anodenplatte auch erreicht werden, dass die Elektrolysereststoffe aus dem Bereich der zweiten Katalysatoroberfläche abgeführt werden können. Dadurch kann ein dauerhafter bestimmungsgemäßer Betrieb der elektrochemischen Zelle realisiert werden.

Vorzugsweise umfasst die Anodenplatte eine der ersten Anodenoberfläche gegenüberliegende zweite Anodenoberfläche und eine an der zweiten Anodenoberfläche angeordnete Kontaktplatte, wobei wenigstens die Anodenplatte oder die Kontaktplatte zum elektrischen Anschließen an eine elektrische Energiequelle dient, die ein elektrisches Anodenpotential bereitstellt. Durch die Kontaktplatte können elektrische Spannungsgradienten im bestimmungsgemäßen Betrieb der elektrochemischen Zelle reduziert, wenn nicht sogar gänzlich vermieden werden.

Die Kontaktplatte ist an der zweiten Anodenoberfläche angeordnet, und kontaktiert diese vorzugsweise nicht nur mechanisch sondern auch elektrisch. Wenigstens die Anodenplatte oder die Kontaktplatte dienen zum elektrischen Anschließen an die elektrische Energiequelle. Die Kontaktplatte ist vorzugsweise ebenfalls aus einem elektrisch gut leitfähigen Werkstoff gebildet. Vorzugsweise ist die Kontaktplatte aus Titan oder einer Titanlegierung gebildet. Darüber hinaus kann die Kontaktplatte jedoch auch zusätzliche gut elektrisch leitfähige Strukturen aufweisen, beispielsweise aus einem anderen Werkstoff mit einer guten elektrischen Leitfähigkeit, wie Silber, Silberlegierungen, Kupfer, Kupferlegierungen und/oder dergleichen. Durch diese Konstruktion kann eine gleichmäßige Verteilung des Anodenpotentials über die zweite Anodenoberfläche und damit auch über die erste Anodenoberfläche verbessert werden, wobei Auswirkungen aufgrund unterschiedlicher Stromdichte über der Anodenoberfläche reduziert werden können. Dies erlaubt es, die Funktionalität der elektrochemischen Zelle über die verfügbare Oberfläche besser zu homogenisieren, sodass insgesamt der Wirkungsgrad verbessert werden kann.

Die Kontaktplatte kann als starre Platte ausgebildet sein und weist vorzugsweise Abmessungen wie die Anodenplatte auf. Die Anodenplatte hat zumindest bezüglich der ersten und der zweiten Anodenoberfläche Abmessungen, die vorzugsweise an die zweite Katalysatoroberfläche angepasst sind, um eine hohe Funktionalität erreichen zu können.

Der Kathodenanschluss und der Anodenanschluss der elektrochemischen Zelle sind vorzugsweise ausgebildet, mit entsprechenden elektrischen Anschlüssen der die elektrische Elektrolysespannung bereitstellenden Energiequelle elektrisch gekoppelt zu werden. Zu diesem Zweck können entsprechende elektrische Anschlüsse vorgesehen sein, die in gewohnter Weise eine elektrische Kontaktierung erlauben, beispielsweise Steckanschlüsse, Schraubanschlüsse, Schweißanschlüsse und/oder dergleichen.

Bezüglich der Elektrolyseeinrichtung wird ferner vorgeschlagen, dass die elektrochemischen Zellen räumlich unmittelbar aneinander angrenzend angeordnet sind. Dadurch kann insgesamt ein kompakter Aufbau der Elektrolyseeinrichtung erreicht werden, wobei zugleich auch ein einfaches Anschließen der elektrochemischen Zellen realisiert werden kann. Insbesondere können die ersten und die zweiten Zuführanschlüsse sowie die ersten und zweiten Ableitanschlüsse strömungstechnisch parallelgeschaltet werden, sodass die elektrochemischen Zellen im Wesentlichen gleichmäßig mit den erforderlichen Stoffen versorgt werden können und zugleich die entsprechenden Produkte durch den bestimmungsgemäßen Betrieb der elektrochemischen Zelle abgeführt werden können. Darüber hinaus kann auf einfache Weise eine elektrische Verschaltung der elektrochemischen Zellen für den bestimmungsgemäßen Betrieb erreicht werden. Die elektrochemischen Zellen können zumindest teilweise in Reihe und/oder parallelgeschaltet sein.

Verfahrenstechnisch kann vorgesehen sein, dass die anodenseitige Separatoroberfläche an der ersten Katalysatoroberfläche angeordnet wird. Dies kann zum Beispiel dadurch erreicht werden, dass die anodenseitige Separatoroberfläche mit dem Katalysator beschichtet wird. Dadurch kann eine zuverlässige feste Verbindung zwischen dem Separator und dem Katalysator erreicht werden. Die zweite Katalysatoroberfläche kann sodann mit ersten Anodenoberflächen verbunden werden, beispielsweise mittels eines elektrisch leitfähigen Klebers oder dergleichen. Dem Grunde nach kann jedoch auch vorgesehen sein, dass die erste Anodenoberfläche gegenüber der zweiten Katalysatoroberfläche mittels einer Kraft vorgespannt ist, um eine entsprechende Kontaktierung erreichen zu können. Darüber hinaus kann vorgesehen sein, dass auf die erste Anodenoberfläche der Anodenplatte eine erste Schicht aus Katalysatorwerkstoff aufgebracht wird. Die hierdurch gebildete erste Schicht aus Katalysatorwerkstoff kann nach Art einer Beschichtung mit der ersten Anodenoberfläche verbunden sein. Auf diese Schicht aus Katalysatorwerkstoff kann eine zweite Schicht aus Separatorwerkstoff aufgebracht werden. Vorzugsweise ist auch die zweite Schicht aus Separatorwerkstoff nach Art einer Beschichtung mit der ersten Schicht aus Katalysatorwerkstoff verbunden. Dadurch kann auf einfache Weise eine einstückig ausgebildete Baueinheit geschaffen werden. Natürlich können auch Kombinationen der vorgenannten Ausführungen vorgesehen sein.

Weiterhin kann die Kontaktplatte an der zweiten Anodenoberfläche angeordnet werden, sodass eine gute elektrische Kontaktierung zwischen der Anodenplatte und der Kontaktplatte erreicht werden kann. Dadurch kann das Anodenpotential im Wesentlichen homogen, vorzugsweise gleichmäßig über die Anodenplatte ausgebildet werden, sodass das Anodenpotential auch in der zweiten Katalysatoroberfläche möglichst homogen zur Verfügung steht. Wenigstens die Anodenplatte oder die Kontaktplatte dienen zum elektrischen Anschließen an die elektrische Energiequelle, zu welchen Zweck entsprechende Anschlussmittel vorgesehen sein können, die es erlauben, eine zuverlässige elektrisch leitfähige Verbindung zur elektrischen Energiequelle herstellen zu können. Zu diesem Zweck können separate Anschlussmittel vorgesehen sein, die die Anodenplatte und/oder die Kontaktplatte kontaktieren. Auf diese Weise kann ein einfaches Herstellverfahren erreicht werden, welches sich zugleich auch gut für eine Serienfertigung, insbesondere automatisierte Serienfertigung eignet. Dadurch kann nicht nur die Zuverlässigkeit bei der Herstellung der elektrochemischen Zellen, insbesondere der anodenseitigen Halbzelle sondern auch im bestimmungsgemäßen Betrieb erreicht werden, da es dieses Herstellverfahren erlaubt, möglichst homogene gleichmäßige Herstellbedingungen gewährleisten zu können.

Ferner wird vorgeschlagen, dass die Katalysatorschicht zumindest teilweise Iridium(IV)-Oxid aufweist. Dieser Werkstoff eignet sich besonders für die Nutzung als Katalysator zur Durchführung der Kohlenstoffdioxid-Elektrolyse. Natürlich kann das Iridium(IV)-Oxid auch mit weiteren Stoffen gemischt sein, die die Funktion als Katalysator weiter verbessern, oder zumindest die mechanischen Eigenschaften der Katalysatorschicht verbessern. Darüber hinaus kann auch ein anderes Metalloxid vorgesehen sein. Es können auch Kombinationen hiervon vorgesehen sein.

Es ist ferner vorgesehen, dass die zweite Katalysatoroberfläche aus dieser Oberfläche hervorstehende Vorsprünge aufweist, die zur Verbindung mit der Anodenplatte durch die erste Anodenoberfläche hindurch in die Anodenplatte hineinragen. Dies erlaubt es, die Verbindung der zweiten Katalysatorfläche mit der ersten Anodenoberfläche weiter zu verbessern. Insbesondere kann im Bereich der ersten Anodenoberfläche anodenplattenseitig ein Übergangsbereich erreicht werden, indem bereits Material des Katalysators vorhanden ist, sodass die katalytische Funktion weiter verbessert werden kann. Insgesamt kann dadurch auch der Wirkungsgrad der anodenseitigen Halbzelle, und damit auch der elektrochemischen Zelle verbessert werden.

Gemäß einer Weiterbildung wird vorgeschlagen, dass wenigstens die Anodenplatte oder die Kontaktplatte Titan und/oder eine Titanlegierung aufweist. Es hat sich gezeigt, dass für die Kohlenstoffdioxid-Elektrolyse Titan im Bereich der Anode besonders günstig ist. Zugleich ermöglicht es Titan, eine gute elektrische Leitfähigkeit bereitzustellen, sodass Anodenpotential möglichst gleichmäßig über die Oberflächen der Anodenplatte ausgebildet werden kann.

Gemäß einer weiteren vorteilhaften Ausgestaltung wird vorgeschlagen, dass die Anodenplatte zumindest teilweise porös ausgebildet ist. Die poröse Ausbildung der Anodenplatte ermöglicht es auf einfache Weise, eine Zuführung des fluiden Anolyten beziehungsweise des protonenabgebenden Stoffs in den Bereich des Katalysators beziehungsweise der Katalysatorschicht ermöglichen. Zur Herstellung der Porosität können bekannte Verfahren genutzt werden. Darüber hinaus kann natürlich vorgesehen sein, dass die Anodenplatte ergänzende Durchgangsöffnungen bereitstellt, die in den jeweiligen gegenüberliegenden Anodenoberflächen münden. Je nach Konstruktion können diese Durchgangsöffnungen gleichmäßig oder auch unsymmetrisch verteilt über die Erstreckung der Anodenoberflächen ausgebildet sein. Die Porosität kann in einer geeigneten Weise abhängig von einer Viskosität und/oder weiteren physikalischen Eigenschaften, wie beispielsweise der Temperatur oder dergleichen des Anolyten und/oder des protonenabgebenden Stoffs gewählt sein.

Es wird weiterhin vorgeschlagen, dass die erste Anodenoberfläche mittels einer elektrisch leitfähigen Verbindungstechnik mit der zweiten Katalysatoroberfläche verbunden ist. Die elektrisch leitfähige Verbindungstechnik ermöglicht es, die erste Anodenoberfläche mit der zweiten Katalysatoroberfläche fest zu verbinden, sodass eine, insbesondere einstückige, Baueinheit gebildet werden kann. Zugleich kann eine elektrisch gut leitfähige Verbindung, vorzugsweise über eine möglichst große Kontaktierungsfläche, zwischen der ersten Anodenoberfläche und der zweiten Katalysatoroberfläche erreicht werden. Dies erlaubt es, dass ein Potentialgradient in Bezug auf das elektrische Anodenpotential im bestimmungsgemä-ßen Betrieb der elektrochemischen Zelle weitgehend reduziert, wenn nicht sogar im Wesentlichen vollständig unterdrückt werden kann. Die elektrisch leitfähige Verbindungstechnik kann zum Beispiel mittels Schweißens, Klebens, Lötens, Kombinationen hiervon und/oder dergleichen realisiert sein. Mittels der elektrisch leitfähigen Verbindungstechnik kann eine elektrisch leitfähige Verbindung an mehreren Punkten und/oder auch flächig, zum Beispiel über die gesamte Kontaktfläche oder einen vorgebbaren Teilbereich der Kontaktfläche, erreicht werden.

Vorzugsweise nutzt die Verbindungstechnik einen elektrisch leitfähigen Klebstoff. Dadurch kann die erste Anodenoberfläche mittels des elektrisch leitfähigen Klebstoffs mit der zweiten Katalysatoroberfläche verbunden sein. Dadurch kann die feste Verbindung zwischen der ersten Anodenoberfläche und der zweiten Katalysatoroberfläche auf einfache und zuverlässige Weise erreicht werden, sodass ein fester Verbund erreicht werden kann, der separat handhabbar ist. Darüber hinaus kann dieser Verbund hinsichtlich seiner Funktionalität separat geprüft werden. Dies ermöglicht es, die Zuverlässigkeit zu verbessern. Als Klebstoff kann zum Beispiel ein elektrisch leitfähiger Klebstoff genutzt werden, der zum Beispiel auf 1-20wt% PTFE, 1-20wt% PVDF oder dergleichen basiert. Darüber hinaus können auch Adhäsionsklebstoffe auf Epoxidharz- oder Cyanacrylat-Basis genutzt werden.

Vorzugsweise weist der Klebstoff Partikel aus Iridium(IV)-Oxid auf. Dadurch kann ein besonders günstiger Übergang zwischen dem Klebstoff und dem Katalysator erreicht werden. Der Klebstoff braucht daher die Wirkung des Katalysators nicht ungünstig zu beeinflussen. Vielmehr kann er die Wirkung des Katalysators weiter unterstützen.

Der Klebstoff kann flächig zwischen der ersten Anodenoberfläche und der zweiten Katalysatoroberfläche angeordnet sein. Es kann aber auch vorgesehen sein, dass der Klebstoff lediglich partiell zwischen den beiden vorgenannten Oberflächen angeordnet ist, beispielsweise unter Ausbildung eines vorgebbaren Musters oder dergleichen. Dadurch kann einerseits der Bedarf an Klebstoff minimiert und andererseits eine zuverlässige gute Verbindung der jeweiligen Oberflächen miteinander erreicht werden.

Darüber hinaus wird vorgeschlagen, dass die Vorsprünge aus dem gleichen Werkstoff wie die Katalysatorschicht gebildet sind. Dadurch kann nicht nur eine gute Verbindung erreicht werden, sondern es kann auch die Funktion des Katalysators verbessert werden.

Die Vorsprünge können ausgebildet sein, in die Anodenplatte hineingepresst zu werden und auf diese Weise eine feste Verbindung zwischen der ersten Anodenoberfläche und der zweiten Katalysatoroberfläche zu verbessern. Insbesondere kann damit erreicht werden, dass eine Schärwirkung zwischen den beiden Oberflächen besser abgefangen werden kann.

Weiterhin wird vorgeschlagen, dass die Vorsprünge durch voneinander beabstandet angeordnete Stifte gebildet sind und die Anodenplatte, insbesondere die erste Anodenoberfläche, Aufnahmeöffnungen zum Aufnehmen der Stifte aufweist. Dadurch ist es möglich, die Anodenplatte mit der Katalysatorschicht nach Art einer Steckverbindung zumindest mechanisch, vorzugsweise aber auch elektrisch, zu koppeln. Zu diesem Zweck können die Aufnahmeöffnungen an mechanische Abmessungen der Stifte angepasst ausgebildet sein, um neben einer mechanischen Verbindung auch eine elektrische Verbindung zu ermöglichen. Dadurch kann die Homogenität des elektrischen Anodenpotentials im Bereich der Katalysatorschicht weiter verbessert werden. Die Steckverbindung kann nach Art eines Pin-Grid-Array (PGA) ausgebildet sein, bei dem die Kontakte, hier die Aufnahmeöffnungen und die Stifte, in einem vorgegeben Raster angeordnet sind. Ebenso ist die Anordnung der Kontakte nach Art eines Staggered-Pin-Grid-Array (SPGA) möglich, bei dem die Kontakte in benachbarten Reihen versetzt zueinander angeordnet sind. Zum Herstellen der Steckverbindung können die Stifte in Bezug auf die Aufnahmeöffnungen derart ausgebildet sein, dass eine vorgegebene Kraft zum Stecken erforderlich ist. Vorzugsweise kann die Verbindung nach Art einer Low-Insertion-Force (LIF)-Verbindung ausgebildet sein. Darüber hinaus kann die Verbindung nach Art einer Zero-Insertion-Force (ZIF)-Verbindung ausgebildet sein, bei der die Verbindung im Wesentlichen kraftlos realisiert werden kann. Dabei kann vorgesehen sein, dass im eingesteckten Zustand mittels einer Klemmvorrichtung eine Klemmverbindung zwischen den Stiften und den Aufnahmeöffnungen bereitgestellt wird. Die Klemmverbindung kann mittels eines, vorzugsweise manuell betätigbaren, Antriebselements betätigt werden, sodass zwischen einem verriegelten Zustand und einem entriegelten Zustand gewechselt werden kann. Dadurch kann nicht nur eine zuverlässige Verbindung erreicht werden, sondern es kann auch erreicht werden, dass die Verbindung wieder lösbar ist.

Gemäß einer Weiterbildung wird vorgeschlagen, dass die Kontaktplatte eine der zweiten Anodenoberfläche gegenüberliegende Kontaktplattenoberfläche aufweist, die Verbindungselemente zumindest zur mechanischen Verbindung der Kontaktplattenoberfläche mit der zweiten Anodenoberfläche aufweist. Dadurch kann die Kontaktplatte mechanisch fest mit der zweiten Anodenoberfläche verbunden werden. Darüber hinaus besteht die Möglichkeit, zugleich auch eine gute elektrische Verbindung zwischen der zweiten Anodenoberfläche und der Kontaktplatte herzustellen. Durch diese Verbindung kann ferner die Homogenität des Anodenpotentials der Anodenplatte weiter verbessert werden. Die Kontaktplatte ist vorzugsweise ebenfalls aus einem gut elektrisch leitfähigen Material ausgebildet, welches in geeigneter Weise zum Material der Anodenplatte ausgewählt sein kann. Beispielsweise kann die Kontaktplatte ebenfalls aus Titan oder einer Titanlegierung gebildet sein. Die Kontaktplatte kann darüber hinaus zumindest teilweise auch Anschlussbereiche aufweisen, die aus einem gut elektrisch leitfähigen Werkstoff wie Silber, Silberlegierungen, Kupfer, Kupferlegierungen und/oder dergleichen gebildet sein können. Darüber hinaus kann die Kontaktplatte über ihre flächige Erstreckung auch entsprechende Leitungsmuster aufweisen, die die elektrische Leitfähigkeit der Kontaktplatte insgesamt weiter verbessern und damit die Homogenität des Anodenpotentials weiter unterstützen.

Vorzugsweise sind die Verbindungselemente und die Kontaktplatte elektrisch leitfähig ausgebildet. Die Verbindungselemente können beispielsweise aus dem gleichen Material wie die Kontaktplatte ausgebildet sein. Die Verbindungselemente können zum Beispiel durch Vorsprünge der Kontaktplatte gebildet sein. Die Vorsprünge können ausgebildet sein, die zweite Anodenfläche in vorgegebener Weise mechanisch und elektrisch kontaktieren zu können. Dadurch kann auf einfache Weise eine zuverlässige Verbindung zwischen der Kontaktplattenoberfläche und der zweiten Anodenoberfläche erreicht werden, die Gradienten im Anodenpotential über die flächige Erstreckung der Anodenplatte reduzieren, wenn nicht sogar weitgehend vermeiden können. Die Verbindungselemente können mittels einer Kraftwirkung mit der zweiten Anodenoberfläche verbunden sein. Darüber hinaus können sie auch verschweißt oder verlötet sein.

Weiterhin wird vorgeschlagen, dass die Verbindungselemente und/oder die Vorsprünge durch voneinander beabstandet angeordnete Stifte gebildet sind. Die Stifte können nach Art eines Rasters an der Kontaktplattenoberfläche ausgebildet sein. Die Stifte haben vorzugsweise einen Durchmesser der kleiner als die Dicke der Kontaktplatte ist. Die Stifte können einen runden oder auch einen eckigen Querschnitt in ihrer Längserstreckung aufweisen. Vorzugsweise sind die Stifte ausgebildet, anodenseitig einen guten elektrischen Kontakt zur zweiten Anodenoberfläche und Anodenplatte herstellen zu können. Zu diesem Zweck können axiale Enden mit einem Dorn oder auch einer Halbkugelform ausgebildet sein.

In Bezug auf die elektrochemische Zelle wird weiterhin vorgeschlagen, dass die Elemente des Kathoden- und des Anodenbereichs in einem Stapel angeordnet sind. Durch abwechselndes Anordnen der Elemente des Kathoden- und des Anodenbereichs kann somit ein modularer Schichtaufbau erreicht werden, der hinsichtlich der Herstellung besonders günstig ist. Darüber hinaus kann der hierdurch gebildete Stapel auf einfache Weise mechanisch stabilisiert werden, sodass die elektrochemische Zelle aus Baugruppe einzeln handhabbar ist. Darüber hinaus kann die elektrochemische Zelle auch separat geprüft werden.

Besonders vorteilhaft eignet sich diese Konstruktion für eine automatisierte Herstellung von elektrochemischen Zellen.
- FIG 1: eine schematische Funktionsblockansicht einer Elektrolyseeinrichtung zur Kohlenstoffdioxid-Elektrolyse mit einer Mehrzahl von elektrisch in Reihe geschalteten elektrochemischen Zellen;
- FIG 2: eine schematische Schnittansicht einer elektrochemischen Zelle der Elektrolyseeinrichtung gemäß FIG 1;
- FIG 3: eine schematische Schnittansicht der anodenseitigen Halbzelle der elektrochemischen Zelle gemäß FIG 2 in einer ersten Ausgestaltung (nicht gemäß der Erfindung);
- FIG 4: eine schematische Schnittansicht wie FIG 3 in einer zweiten Ausgestaltung (nicht gemäß der Erfindung);

- FIG 5: eine schematische Schnittansicht wie FIG 3 in einer dritten Ausgestaltung (nicht gemäß der Erfindung);

- FIG 6: eine schematische vergrößerte Darstellung eines Bereichs VI in FIG 5;
- FIG 7: eine schematische Schnittansicht basierend auf FIG 3 in einer vierten Ausgestaltung;
- FIG 8: eine schematische perspektivische Darstellung einer Katalysatoroberfläche mit Vorsprüngen, die nach Art von Stiften ausgebildet sind, bei der Ausgestaltung gemäß FIG 7;
- FIG 9: eine vergrößerte Darstellung eines Bereichs IX in FIG 8; und
- FIG 10: eine schematische Draufsicht auf eine erste Anodenoberfläche einer Anodenplatte, die zur Verbindung mit der Katalysatorschicht gemäß FIG 8 dient.

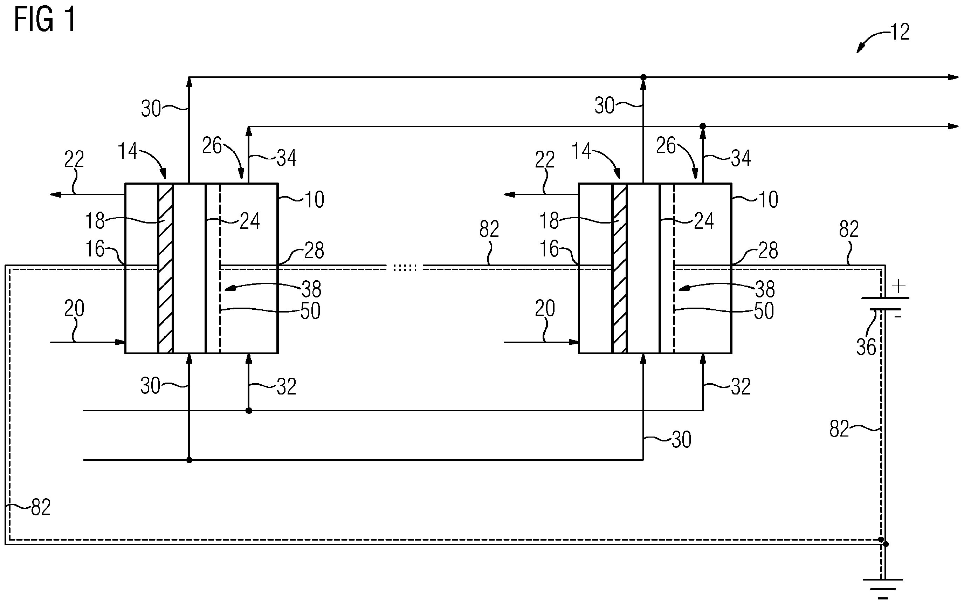

FIG 1 zeigt in einer schematischen Funktionsblockdarstellung eine Elektrolyseeinrichtung 12 zur Kohlenstoffdioxid-Elektrolyse, bei der im bestimmungsgemäßen Betrieb aus Kohlenstoffdioxid zumindest teilweise Kohlenstoffmonoxid hergestellt wird. Die Elektrolyseeinrichtung 12 umfasst eine Mehrzahl von elektrochemischen Zellen 10, in denen die Kohlenstoffdioxid-Elektrolyse stattfindet, von denen in FIG 1 zwei exemplarisch dargestellt sind. In der vorliegenden Ausgestaltung ist vorgesehen, dass die elektrochemischen Zellen 10 elektrisch in Reihe geschaltet sind, wobei die Reihenschaltung an eine elektrische Energiequelle 36 mittels elektrischer Leitungen 82 angeschlossen ist, um die elektrochemischen Zellen 10 in entsprechender Weise mit elektrischen Potentialen an den jeweiligen Elektroden, wie im Folgenden noch erläutert wird, zu beaufschlagen.

Jede der elektrochemischen Zellen 10 weist einen Kathodenbereich 14 und einen Anodenbereich 26 auf, die mittels eines Separators 24 voneinander getrennt sind. Der Kathodenbereich 14 umfasst einen elektrischen Kathodenanschluss 16, eine Gasdiffusionselektrode 18, die elektrisch mit dem Kathodenanschluss 16 gekoppelt ist, einen ersten Zuführanschluss 20 zum Zuführen von Kohlenstoffdioxid und einen ersten Ableitanschluss 22 zum Ableiten von beim bestimmungsgemäßen Betrieb der elektrochemischen Zelle 10 zumindest teilweise gebildeten Elektrolysestoffen, die unter anderem Kohlenstoffmonoxid umfassen. Darüber hinaus kann in den Elektrolysestoffen natürlich auch noch ein Rest von Kohlenstoffdioxid enthalten sein, welches nicht in der elektrochemischen Zelle 10 umgewandelt wurde. Darüber hinaus sind weitere Reststoffe möglich. Ferner ist der Kathodenbereich 14 an Leitungen 30 zum Zuführen und Ableiten eines Katholyten, hier eine Salzlösung angeschlossen.

Der Anodenbereich 26 umfasst einen elektrischen Anodenanschluss 28, eine Anodenplatte 50, die mit dem elektrischen Anodenanschluss 28 elektrisch gekoppelt ist, einen zweiten Zuführanschluss 32 zum Zuführen eines protonenabgebenden Stoffes, und einen zweiten Ableitanschluss 34 zum Ableiten von beim bestimmungsgemäßen Betrieb der elektrochemischen Zelle 10 zumindest teilweise gebildeten Elektrolysereststoffen.

Der Kathodenanschluss 16 und der Anodenanschluss 28 sind ausgebildet, mit einer geeigneten beziehungsweise entsprechenden elektrischen Elektrolysespannung der elektrischen Energiequelle 36 elektrisch gekoppelt zu werden. Die jeweiligen ersten und zweiten Zuführanschlüsse 20, 32, sowie die jeweiligen ersten und zweiten Ableitanschlüsse 22, 34, sind jeweils entsprechend strömungstechnisch parallelgeschaltet, sodass die elektrochemischen Zellen 10 aus jeweiligen Quellen für die entsprechenden Stoffe im bestimmungsgemäßen Betrieb versorgt werden können.

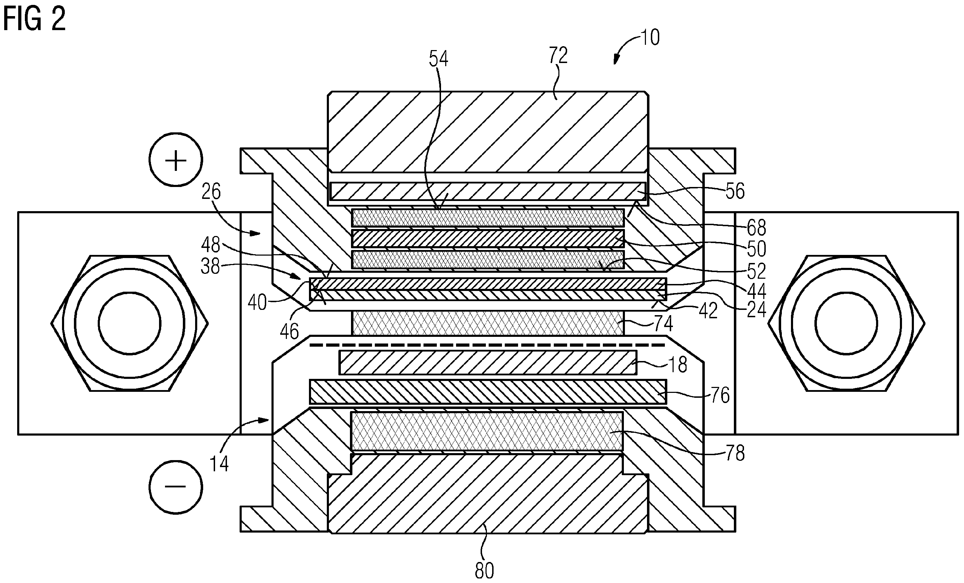

FIG 2 zeigt in einer schematischen Schnittdarstellung eine der elektrochemischen Zellen 10 gemäß FIG 1. Der Übersichtlichkeit halber sind die Zuführanschlüsse 20, 32 sowie die Ableitanschlüsse 22, 34 nicht dargestellt.

In FIG 2 ist in Schnittansicht eine der elektrochemischen Zellen 10 dargestellt. Zu erkennen ist, dass die elektrochemische Zelle 10 einen gestapelten Aufbau aufweist. Der Kathodenbereich 14 umfasst ein Katholytelement 74, welches an eine Gasdiffusionselektrode 18 angrenzt, die vorliegend zumindest teilweise die Kathode darstellt. Die Gasdiffusionselektrode 18 grenzt ferner an einen Kontaktrahmen 76, der vorliegend aus Silber oder einer Silberlegierung gebildet ist. Der Kontaktrahmen 76 grenzt an ein Gasabstandselement 78, welches unter anderem der Versorgung mit Kohlenstoffdioxid und der Abführung von Kohlstoffmonoxid dient. Das Gasabstandselement 78 grenzt an ein Fenster 18, mit dem der Kathodenbereich 14 abgeschlossen ist. Bei alternativen Ausgestaltungen kann anstelle des Fensters 18 oder ergänzend hierzu auch eine Endplatte oder dergleichen vorgesehen sein.

Das Katholytelement 74 grenzt ferner an den Separator 24, und zwar an eine kathodenseitige Separatoroberfläche 42. Gegenüberliegend zur kathodenseitigen Separatoroberfläche weist der Separator 24 eine anodenseitige Separatoroberfläche auf. Der Separator 24 ist vorliegend aus einem Stoff gebildet, der für Protonen durchlässig ist. In der vorliegenden Ausgestaltung ist als Werkstoff für den Separator 24 Nafion vorgesehen. In alternativen Ausgestaltungen kann natürlich hier auch ein anderer entsprechend geeigneter Werkstoff vorgesehen sein.

Der Aufbau und die Funktion der Gasdiffusionselektrode 18 ist beispielsweise aus der europäischen Patentanmeldung 19 182 017.4 bekannt. Daher wird diesbezüglich auf die diesbezügliche Offenbarung verwiesen.

In der vorliegenden Ausgestaltung ist vorgesehen, dass der Anodenbereich 26 als Baueinheit zusammen mit dem Separator 24 ausgebildet ist. Dadurch kann eine separat handhabbare Einheit geschaffen werden, die die Herstellung der elektrochemischen Zelle 10 vereinfacht und hinsichtlich der Zuverlässigkeit nicht nur bei der Herstellung sondern auch im bestimmungsgemäßen Betrieb zu verbessern vermag.

Zu diesem Zweck ist im Anodenbereich 26 vorgesehen, dass der Separator 24 mit einer Katalysatorschicht 44 nach Art eines membran-electrode-assembly (MEA) ausgebildet ist. Zu diesem Zweck ist der Separator 24 ebenfalls als Membran ausgebildet. Der Separator 24 weist die anodenseitige Separatoroberfläche 40 und die der anodenseitigen Separatoroberfläche 40 gegenüberliegende kathodenseitige Separatoroberfläche 42 auf. Ferner weist die Katalysatorschicht 44 eine erste Katalysatoroberfläche 46 und eine der ersten Katalysatoroberfläche 46 gegenüberliegende zweite Katalysatoroberfläche 48 auf. Die erste Katalysatoroberfläche 46 ist der anodenseitigen Separatoroberfläche 40 zugewandt. In der vorliegenden Ausgestaltung ist vorgesehen, dass die erste Katalysatoroberfläche 46 mit der anodenseitigen Separatoroberfläche 40 fest verbunden ist. Die Katalysatorschicht 44 kann daher nach Art einer Beschichtung auf der anodenseitigen Separatoroberfläche 40 aufgebracht sein. Dadurch ist eine zuverlässige feste Verbindung zwischen der Katalysatorschicht 44 und dem Separator 24 realisiert.

Der Anodenbereich 26 umfasst ferner eine fluiddurchlässige Anodenplatte 50, die eine erste Anodenoberfläche 52 und eine der ersten Anodenoberfläche 52 gegenüberliegende zweite Anodenoberfläche 54 aufweist. Die erste Anodenoberfläche 52 ist der zweiten Katalysatoroberfläche 48 zugewandt. In der vorliegenden Ausgestaltung ist vorgesehen, dass die erste Anodenoberfläche 52 mit der zweiten Katalysatoroberfläche 48 verbunden ist. Wie im Folgenden noch ausgeführt werden wird, kann diese Verbindung auf unterschiedliche Weise realisiert sein, und zwar entsprechend der im Folgenden diskutierten unterschiedlichen Ausführungsbeispiele.

Die Anodenplatte 50 ist vorliegend porös ausgebildet, um die gewünschte Gasdurchlässigkeit oder auch die gewünschte Durchlässigkeit für eine Flüssigkeit, beispielsweise Wasser oder dergleichen, realisieren zu können.

An der zweiten Anodenoberfläche 54 ist eine Kontaktplatte 56 angeordnet. Die Kontaktplatte 56 weist diesbezüglich eine Kontaktplattenoberfläche 68 auf, die mit der zweiten Anodenoberfläche 54 verbunden ist. Die Kontaktplatte 56 ist mit dem elektrischen Anodenanschluss 28 elektrisch gekoppelt. An einer der Kontaktplattenoberfläche 68 gegenüberliegenden Oberfläche der Kontaktplatte 56 ist eine Endplatte 72 angeordnet, die den Anodenbereich 26 nach außen abschließt.

Der Separator 24, die Katalysatorschicht 44 sowie die Anodenplatte 50 bilden eine anodenseitige Halbzelle 38 als Baueinheit. Je nach Konstruktion und bedarf kann die Baueinheit auch die Kontaktplatte 56 umfassen. Die anodenseitige Halbzelle 38, insbesondere ihr Aufbau, wird anhand der weiteren folgenden Ausführungsbeispiele näher erläutert.

Die Katalysatorschicht 44 ist vorliegend überwiegend aus Iridium(IV)-Oxid gebildet. Dem Grunde nach können jedoch - je nach gewünschter Funktionalität - auch ein anderes Metalloxid oder auch Mischungen hiervon zum Einsatz kommen.

Die Anodenplatte 50 sowie auch die Kontaktplatte 56 sind vorliegend aus einer Titanlegierung gebildet. Dadurch kann eine gute elektrische Leitfähigkeit erreicht werden, sodass das elektrische Anodenpotential über die Anodenoberflächen 52, 54 möglichst gleichmäßig beziehungsweise homogen ausgebildet ist. Dies fördert die Wirksamkeit des Elektrolysevorgangs in der elektrochemischen Zelle 10.

Als Anolyt kann Wasser oder auch eine Salzlösung zum Einsatz kommen, welches gleichzeitig auch den protonenabgebenden Stoff bereitstellt, sodass Protonen für die gewünschte elektrochemische Reaktion der Kohlenstoffdioxid-Elektrolyse bereitgestellt werden können.

An der Anode kann eine chemische Reaktion gemäß der folgenden Gleichung realisiert werden:

2H₂O(I) + 4OH⁻ → O₂(g) + 4 e- + 4H₂O(I)

An der Kathode findet eine Hauptreaktion gemäß der folgenden chemischen Gleichung statt:

CO₂(g) + H₂O(I) + 2 e⁻ → CO(g) + 2OH⁻

2H₂O(I) + 2 e⁻ → H₂(g)+ 2OH⁻

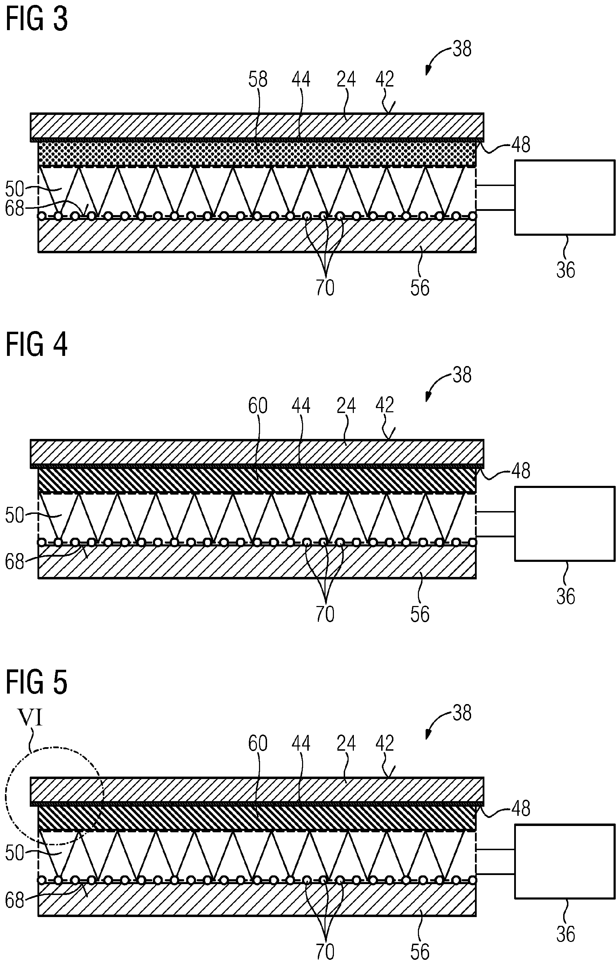

FIG 3 zeigt eine erste Ausgestaltung der anodenseitigen Halbzelle 38. Aus FIG 3 ist ersichtlich, dass die zweite Katalysatoroberfläche 48 über einen Klebstoff 58 mit der ersten Anodenoberfläche 52 verbunden ist. Der Klebstoff 58 ist in dieser Ausgestaltung ein diffusionsoffener Klebstoff, der eine stoffschlüssige Verbindung zwischen der zweiten Katalysatoroberfläche 48 und der ersten Anodenoberfläche 52 herstellt. Der Klebstoff kann zum Beispiel PTFE, PVDF sowie auch N-Methyl-2-Pyrroloidon als Lösungsmittel aufweisen. N-Methyl-2-Pyrroloidon löst nach der Zugabe die beiden vorgenannten Polymere auf, und anschließend, nach einem Verdampfen, bildet sich eine feste Klebeschicht. Dem Grunde nach können jedoch auch andere Adhäsionsklebestoffe zum Beispiel auf Basis von Epoxidharz oder auf Basis von Cyanacrylat zum Einsatz kommen.

Der Klebstoff 58 besteht vorzugsweise aus einem gleichen beziehungsweise ähnlichen Stoff wie der Separator 24. Im Allgemeinen ist anzumerken, dass wenn, wie vorliegend vorgesehen, Nafion als Stoff für den Separator 24 genutzt wird, welches ein perfluoriertes Copolymer ist, das als ionische Gruppe eine Sulfongruppe enthält, möglichst ein ähnlicher Stoff für den Klebstoff zum Einsatz kommen sollte, der möglichst keine fremden chemischen Komponenten in den Elektrolyseprozess einzubringen vermag, sodass der Elektrolyseprozess nach Möglichkeit unbeeinträchtigt bleiben kann. Die Nutzung von anderen Klebstoffen ist danach im Wesentlichen dadurch beschränkt, dass der Elektrolyseprozess nicht wesentlich beeinträchtigt wird.

Die zweite Anodenoberfläche 54 ist über Verbindungselemente 70 mit der Kontaktplatte 56 mechanisch und elektrisch verbunden. Die Verbindungselemente 70 können eine punktuelle oder eine durchgehende mechanische und elektrische Verbindung bereitstellen, beispielsweise mittels Schweiß- oder Klebepunkten oder mittels Lötens oder dergleichen, je nach Eignung.

In der vorliegenden Ausgestaltung ist vorgesehen, dass die Anodenplatte 50 mit der elektrischen Energiequelle 36, und zwar deren elektrischem Anodenpotential, elektrisch gekoppelt ist. Durch die Kontaktplatte 56 kann bei der porös ausgebildeten Anodenplatte 50 auch bei großer Stromdichte eine im Wesentlichen homogene Einstellung des elektrischen Anodenpotentials über die Anodenoberflächen 52, 54 erreicht werden.

FIG 4 zeigt eine weitere Ausgestaltung einer anodenseitigen Halbzelle 38 basierend auf der Ausgestaltung gemäß FIG 3. Im Unterschied zur Ausgestaltung gemäß FIG 3 ist bei der Ausgestaltung gemäß FIG 4 vorgesehen, dass der Klebstoff 58 durch den Klebstoff 60 ersetzt ist. Der weitere Aufbau entspricht dem Ausführungsbeispiel gemäß FIG 3.

Der Klebstoff 60 kann dem Grunde nach wie der Klebstoff 58 ausgebildet sein, jedoch umfasst er ferner Fasern aus Iridium(IV)-Oxid. Dadurch kann die Funktion insbesondere in Bezug auf die katalytische Wirkung weiter verbessert werden. Ansonsten entspricht der Aufbau der anodenseitigen Halbzelle 38 dem Aufbau, wie er bereits anhand von FIG 3 erläutert worden ist. Der Klebstoff 60 weist insbesondere gegenüber dem Klebstoff 58 eine höhere elektrische Leitfähigkeit auf.

FIG 5 zeigt eine weitere Ausgestaltung für eine anodenseitige Halbzelle 38 basierend auf der Ausgestaltung gemäß FIG 4, weshalb ergänzend auf die diesbezüglichen Ausführungen verwiesen wird.

Bei der Ausgestaltung gemäß FIG 5 ist vorgesehen, dass Iridium(IV)-Oxid-Fasern beziehungsweise mit Iridium(IV)-Oxid beschichtete Separatorstreifen oder gegebenenfalls auch andere Kunststoff beziehungsweise Metall-Fasern oder -Streifen bereits bei der Herstellung des Separators 24 an einer Seite des Separators 24 aufgetragen werden, und zwar auf der anodenseitigen Separatoroberfläche 40. In einem folgenden Fertigungsschritt wird dann der Separator 24, der hierdurch die Katalysatorschicht 44 bereits enthält, mit der ersten Anodenoberfläche 52 der Anodenplatte 50 verbunden. Die Verbindung kann wie anhand von FIG 3 und 4 erläutert erfolgen. Auf diese Weise kann die Katalysatorschicht 44 mechanisch stabiler mit dem Separator 24 verbunden werden.

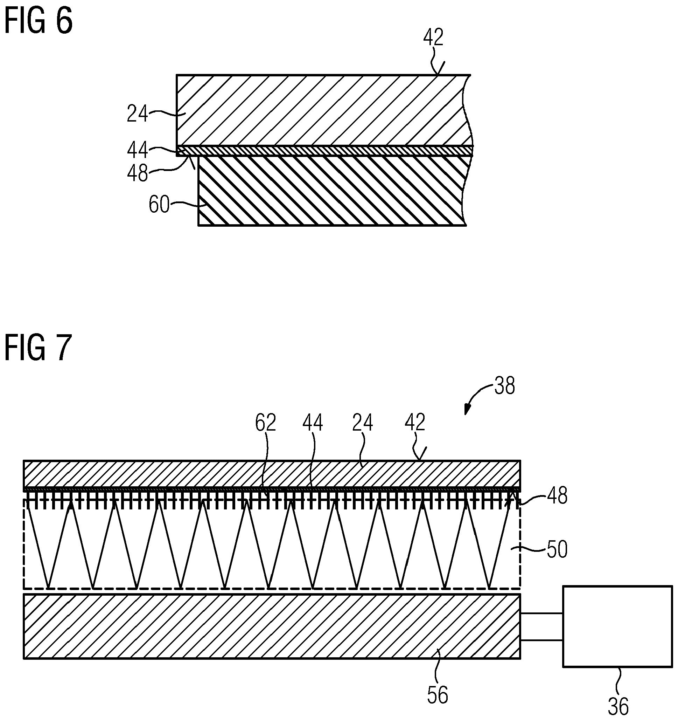

Der Klebstoff 58, 60 zwischen der Katalysatorschicht 44 und der Anodenplatte 50 kann je nach Anwendung ganzflächig oder auch punktuell angeordnet sein. FIG 6 zeigt einen vergrößerten Ausschnitt der FIG 5 im Bereich VI.

FIG 7 zeigt eine weitere Ausgestaltung einer anodenseitigen Halbzelle 38, die dem Grunde nach auf den zuvor beschriebenen Ausgestaltungen gemäß der FIG 3 bis 6 basiert, weshalb ergänzend auf die diesbezüglichen Ausführungen verwiesen wird. Im Unterschied zu den Ausgestaltungen gemäß der FIG 3 bis 6 ist bei der Ausgestaltung gemäß FIG 7 kein Klebstoff vorgesehen. Stattdessen weist die zweite Katalysatoroberfläche 48 der Katalysatorschicht 44 Vorsprünge 62 aus Katalysatorwerkstoff auf, die durch die erste Anodenoberfläche 52 in die Anodenplatte 50 hineinragen. Bei dieser Ausgestaltung ist ferner vorgesehen, dass die elektrische Energiequelle 36 mit der Kontaktplatte 56 elektrisch gekoppelt ist. Dadurch können sowohl eine gute elektrische als auch mechanische Verbindung und zugleich auch eine gute Wirksamkeit in Bezug auf die vorgesehene Elektrolyse von Kohlenstoffdioxid erreicht werden.

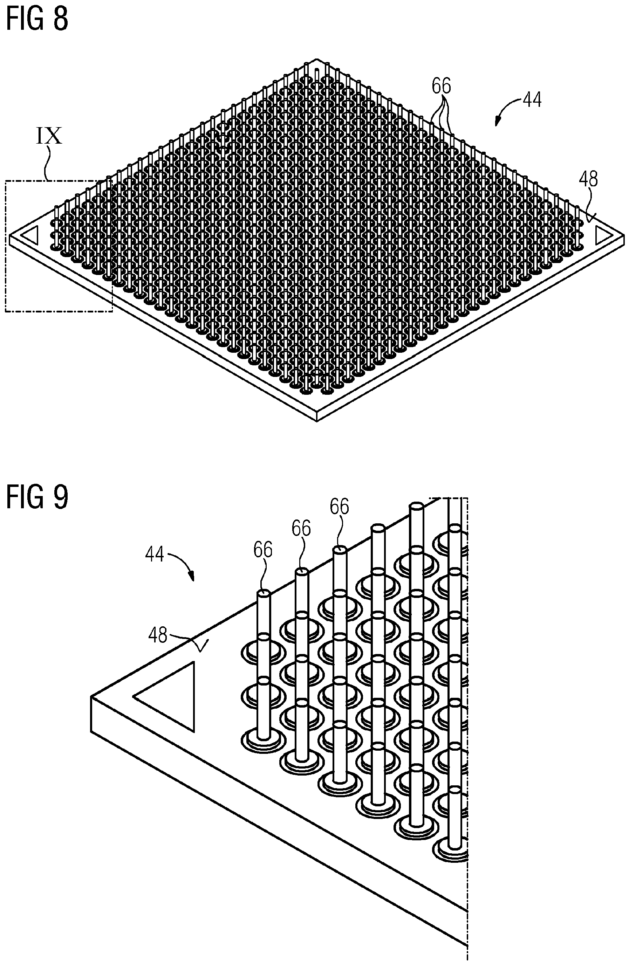

Die FIG 8 bis 10 zeigen eine Ausgestaltung, die auf der Ausgestaltung gemäß FIG 7 basiert. Wie aus den FIG 8 bis 10 ersichtlich ist, kann die Membrananordnung aus dem Separator 24 und der Katalysatorschicht 44 steckbar mit der Anodenplatte 50 verbunden werden. Dadurch können nicht nur eine einfache Montage sondern auch eine Lösbarkeit realisiert werden, die es erlaubt, bedarfsweise die Anodenplatte 50 von dem Membranaufbau aus dem Separator 24 und der Katalysatorschicht 44 trennen zu können. Zu diesem Zweck sieht die Ausgestaltung gemäß FIG 7 vor, dass die Katalysatorschicht 44 die Vorsprünge 62 als Stifte 66 bereitstellt. Diese ragen aus der zweiten Katalysatoroberfläche 48 hervor (FIG 8). FIG 9 zeigt einen vergrößerten Ausschnitt im Bereich IX der FIG 8.

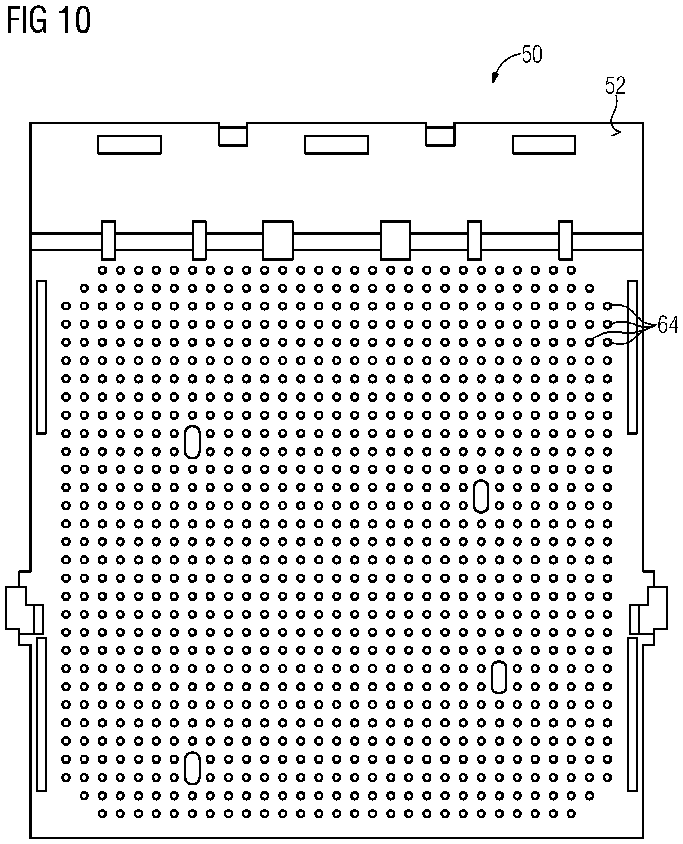

FIG 10 zeigt in einer schematischen Draufsicht auf die erste Anodenoberfläche 52 die Anodenplatte 50. Zu erkennen ist, dass entsprechend der Anordnung der Stifte 66 der Katalysatorschicht 44 gemäß FIG 8 Aufnahmeöffnungen 64 vorgesehen sind. Bei einer Verbindung der Katalysatorschicht 44 mit der Anodenplatte 50 werden die Stifte 66 in die Aufnahmeöffnungen 64 eingeführt. Dadurch kann eine zuverlässige mechanische und elektrische Verbindung zwischen der Anodenplatte 50 und der Katalysatorschicht 44 erreicht werden.

Vorteilhaft kann vorgesehen sein, dass die Verbindung lösbar ist. Dies kann durch eine entsprechende Trennkraft erreicht werden, sodass letztendlich die Anodenplatte 50 auf einfache Weise von der Katalysatorschicht 44 wieder entfernt werden kann. Dem Grunde nach kann jedoch auch eine im Wesentliche kraftlose Verbindung vorgesehen sein, indem die Anodenplatte 50 ein Verriegelungselement umfasst, welches es erlaubt, in einem ersten Verriegelungszustand ein nahezu kraftloses Einführen der Stifte 66 in die Aufnahmeöffnungen 64 zu ermöglichen und in einem zweiten Verriegelungszustand die Stifte 66 in den Aufnahmeöffnungen 64 festzulegen. Auf diese Weise kann zugleich auch eine einfache lösbare Montage erreicht werden.

Insgesamt kann mit der Erfindung erreicht werden, dass der Aufbau der elektrochemischen Zelle 10 sowie auch der Elektrolyseeinrichtung 12 deutlich vereinfacht werden kann. Darüber hinaus kann auch die Zuverlässigkeit erhöht werden. Als Katholyt kann zum Beispiel Kaliumhydrogenkarbonat oder auch Kaliumsulfat oder dergleichen zum Einsatz kommen.

Mit der erfindungsgemäßen anodenseitigen Halbezelle 38 kann ein Faraday-Wirkungsgrad in einem Bereich von etwa 90 % bis 100 %, vorzugsweise etwa 95 % erreicht werden. Die Elektrolyse erfolgt vorzugsweise in einem Temperaturbereich, der oberhalb einer Raumtemperatur ist. Vorzugsweise kann der Temperaturbereich von etwa 40°C bis etwa 90°C, besonders bevorzugt bei etwa 60°C gewählt sein.

Mit der Erfindung können die folgenden Vorteile erreicht werden:
- Eine feste Verbindung zwischen einer Kontaktstruktur auf einer anodischen Seite durch einen Verbund aus der Katalysatorschicht und dem Separator erreicht werden.
- Durch eine häufige Kontaktierung kann erreicht werden, dass das Anodenpotential auch bei einer großen Stromdichte im Wesentlichen gleichmäßig über der Fläche anliegt.
- Die Baueinheit aus dem Separator und der Katalysatorschicht neigt erheblich weniger zur Schwellung beziehungsweise zum Aufquellen und dadurch auch weniger dazu, von der Kontaktierung abzuheben (buckling).
- Die Beschichtung des Separators mit dem Katalysator kann vor mechanischem Abrieb bei einem weiteren Handling im Bereich der Fertigung oder auch im bestimmungsgemäßen Betrieb geschützt werden.
- Für die Kontaktierung braucht keine große Kraft aufgewendet zu werden.
- Es kann ein verbessertes Handhaben in der Produktion und eine vereinfachte Montage erreicht werden.

Die vorgenannten Ausführungsbeispiele dienen ausschließlich der Erläuterung der Erfindung und sollen diese nicht beschränken.

## Patentansprüche

1. Anodenseitige Halbzelle (38) für eine elektrochemische Zelle (10) einer Elektrolyseeinrichtung (12) zur Kohlenstoffdioxid-Elektrolyse und/oder zur Kohlenstoffmonoxid-Elektrolyse, mit
- einem als Membran ausgebildeten Separator (24), der eine anodenseitige Separatoroberfläche (40) und eine der anodenseitigen Separatoroberfläche (40) gegenüberliegende kathodenseitige Separatoroberfläche (42) aufweist,
- einer Katalysatorschicht (44), welche eine erste Katalysatoroberläche (46) und eine der ersten Katalysatoroberläche (46) gegenüberliegende zweite Katalysatoroberläche (48) aufweist, wobei die erste Katalysatoroberläche (46) der anodenseitigen Separatoroberfläche (40) zugewandt ist, und
- einer fluiddurchlässigen Anodenplatte (50), die eine erste Anodenoberfläche (52) aufweist, wobei die erste Anodenoberfläche (52) der zweiten Katalysatoroberfläche (48) zugewandt ist,
- wobei die zweite Katalysatoroberfläche (48) aus dieser Oberfläche hervorstehende Vorsprünge (62) aufweist, die zur Verbindung mit der Anodenplatte (50) durch die erste Anodenoberfläche (52) hindurch in die Anodenplatte (50) hineinragen.

2. Anodenseitige Halbzelle nach Anspruch 1, **dadurch gekennzeichnet, dass** die Anodenplatte (50) eine der ersten Anodenoberfläche (52) gegenüberliegende zweite Anodenoberfläche (54) aufweist, wobei an der zweiten Anodenoberfläche (52) eine Kontaktplatte (56) angeordnet ist und wobei wenigstens die Anodenplatte (50) oder die Kontaktplatte (56) zum elektrischen Anschließen an eine elektrische Energiequelle (36) dient, die ein elektrisches Anodenpotential bereitstellt.

3. Anodenseitige Halbzelle nach einem der vorhergehenden Ansprüche, **dadurch gekennzeichnet, dass** wenigstens die Anodenplatte (50) oder die Kontaktplatte (56) Titan und/oder eine Titanlegierung aufweist.

4. Anodenseitige Halbzelle nach einem der vorhergehenden Ansprüche, **dadurch gekennzeichnet, dass** die Anodenplatte (50) zumindest teilweise porös ausgebildet ist.

5. Anodenseitige Halbzelle nach einem der vorhergehenden Ansprüche, **dadurch gekennzeichnet, dass** die erste Anodenoberfläche (52) mittels einer elektrisch leitfähigen Verbindungstechnik mit der zweiten Katalysatoroberfläche (48) verbunden ist.

6. Anodenseitige Halbzelle nach Anspruch 5, **dadurch gekennzeichnet, dass** die Verbindungstechnik einen elektrisch leitfähigen Klebstoff (58, 60) nutzt, wobei der Klebstoff (60) vorzugsweise Partikel aus Iridium(IV)-oxid aufweist.

7. Anodenseitige Halbzelle nach einem der vorhergehenden Ansprüche, **dadurch gekennzeichnet, dass** die Vorsprünge (62) aus dem gleichen Werkstoff wie die Katalysatorschicht (44) gebildet sind.

8. Anodenseitige Halbzelle nach Anspruch 7, **dadurch gekennzeichnet, dass** die Vorsprünge (62) durch voneinander beabstandet angeordnete Stifte (66) gebildet sind und die Anodenplatte (50), insbesondere die erste Anodenoberfläche (52), Aufnahmeöffnungen (64) zum Aufnehmen der Stifte (66) aufweist.

9. Anodenseitige Halbzelle nach einem der vorhergehenden Ansprüche 2 bis 8, **dadurch gekennzeichnet, dass** die Kontaktplatte (56) eine der zweiten Anodenoberfläche (54) gegenüberliegende Kontaktplattenoberfläche (68) aufweist, die Verbindungselemente (70) zumindest zur mechanischen Verbindung der Kontaktplattenoberfläche (68) mit der zweiten Anodenoberfläche (54) aufweist.

10. Anodenseitige Halbzelle nach Anspruch 9, **dadurch gekennzeichnet, dass** die Verbindungselemente (70) und die Kontaktplatte (56) elektrisch leitfähig ausgebildet sind.

11. Elektrochemische Zelle (10) für eine Elektrolyseeinrichtung (12) zur Kohlenstoffdioxid-Elektrolyse und/oder zur Kohlenstoffmonoxid-Elektrolyse, mit
- einem Kathodenbereich (14), der einen elektrischen Kathodenanschluss (16), eine Gasdiffusionselektrode (18), einen ersten Zuführanschluss (20) zum Zuführen von Kohlenstoffdioxid und/oder Kohlenstoffmonoxid und einen ersten Ableitanschluss (22) zum Ableiten von beim bestimmungsgemäßen Betrieb der elektrochemischen Zelle (10) zumindest teilweise gebildeten Elektrolysestoffen aufweist,
- einem mittels eines Separators (24) vom Kathodenbereich (14) getrennt ausgebildeten Anodenbereich (26), der einen elektrischen Anodenanschluss (28), eine Anodenplatte (50), einen zweiten Zuführanschluss (32) zum Zuführen eines protonenabgebenden Stoffs und einen zweiten Ableitanschluss (34) zum Ableiten von beim bestimmungsgemäßen Betrieb der elektrochemischen Zelle (10) zumindest teilweise gebildeten Elektrolysereststoffen aufweist,
- wobei der Kathodenanschluss (16) und der Anodenanschluss (28) ausgebildet sind, mit entsprechenden elektrischen Anschlüssen einer eine elektrische Elektrolysespannung bereitstellenden elektrischen Energiequelle (36) elektrisch gekoppelt zu werden,
**dadurch gekennzeichnet, dass**
der Anodenbereich (26) und der Separator (24) als anodenseitige Halbzelle (38) gemäß einem der vorhergehenden Ansprüche ausgebildet sind.

12. Elektrochemische Zelle nach Anspruch 11, **dadurch gekennzeichnet, dass** die Elemente des Kathoden- und des Anodenbereichs (14, 26) in einem Stapel angeordnet sind.

13. Elektrolyseeinrichtung (12) zur Kohlenstoffdioxid-Elektrolyse und/oder zur Kohlenstoffmonoxid-Elektrolyse, **gekennzeichnet durch** elektrochemische Zellen (10) gemäß Anspruch 11 oder 12, wobei die elektrochemischen Zellen (10) räumlich unmittelbar aneinandergrenzend angeordnet sind.

14. Verfahren zum Herstellen einer anodenseitigen Halbzelle (38) für eine elektrochemische Zelle (10) einer Elektrolyseeinrichtung (12) zur Kohlenstoffdioxid-Elektrolyse und/oder zur Kohlenstoffmonoxid-Elektrolyse, mit den Schritten
- Anordnen einer anodenseitigen Separatoroberfläche (40) eines als Membran ausgebildeten Separators (24), der eine der anodenseitigen Separatoroberfläche (40) gegenüberliegende kathodenseitige Separatoroberfläche (42) aufweist, an einer ersten Katalysatoroberfläche (46) einer Katalysatorschicht (44), welche Katalysatorschicht (44) eine der ersten Katalysatoroberfläche (46) gegenüberliegende zweite Katalysatoroberfläche (48) aufweist,
- Anordnen einer ersten Anodenoberfläche (52) einer fluiddurchlässigen Anodenplatte (50) an der zweiten Katalysatoroberfläche (48), wobei die zweite Katalysatoroberfläche (48) aus dieser Oberfläche hervorstehende Vorsprünge (62) aufweist, die zur Verbindung mit der Anodenplatte (50) durch die erste Anodenoberfläche (52) hindurch in die Anodenplatte (50) hineinragen.

## Claims

1. An anode-side half-cell (38) for an electrochemical cell (10) of an electrolysis device (12) for carbon dioxide electrolysis and/or for carbon monoxide electrolysis, having
- a separator (24) which is in the form of a membrane and has an anode-side separator surface (40) and a cathode-side separator surface (42) on the opposite side from the anode-side separator surface (40),
- a catalyst layer (44) having a first catalyst surface (46) and a second catalyst surface (48) on the opposite side from the first catalyst surface (46), wherein the first catalyst surface (46) faces the anode-side separator surface (40), and
- a fluid-permeable anode plate (50) having a first anode surface (52), wherein the first anode surface (52) faces the second catalyst surface (48),
- wherein the second catalyst surface (48) has projections (62) that protrude from this surface and project into the anode plate (50) through the first anode surface (52) for bonding to the anode plate (50).

2. The anode-side half-cell as claimed in claim 1, **characterized in that** the anode plate (50) has a second anode surface (54) on the opposite side from the first anode surface (52), where a contact plate (56) is disposed on the second anode surface (52) and where at least the anode plate (50) or the contact plate (56) serves for electrical connection to an electrical energy source (36) which provides an electrical anode potential.

3. The anode-side half-cell as claimed in either of the preceding claims, **characterized in that** at least the anode plate (50) or the contact plate (56) includes titanium and/or a titanium alloy.

4. The anode-side half-cell as claimed in any of the preceding claims, **characterized in that** the anode plate (50) is at least partly porous.

5. The anode-side half-cell as claimed in any of the preceding claims, **characterized in that** the first anode surface (52) is connected to the second catalyst surface (48) by means of an electrically conductive bonding technique.

6. The anode-side half-cell as claimed in claim 5, **characterized in that** the bonding technique uses an electrically conductive adhesive (58, 60), where the adhesive (60) preferably includes particles of iridium(IV) oxide.

7. The anode-side half-cell as claimed in any of the preceding claims, **characterized in that** the projections (62) are formed from the same material as the catalyst layer (44).

8. The anode-side half-cell as claimed in claim 7, **characterized in that** the projections (62) are formed by mutually spaced pins (66) and the anode plate (50), especially the first anode surface (52), has receiving openings (64) for receiving the pins (66).

9. The anode-side half-cell as claimed in any of claims 2 to 8, **characterized in that** the contact plate (56) has a contact plate surface (68) which is on the opposite side from the second anode surface (54) and has connecting elements (70) at least for mechanical connection of the contact plate surface (68) to the second anode surface (54).

10. The anode-side half-cell as claimed in claim 9, **characterized in that** the connecting elements (70) and the contact plate (56) are electrically conductive.

11. An electrochemical cell (10) of an electrolysis device (12) for carbon dioxide electrolysis and/or for carbon monoxide electrolysis, comprising
- a cathode region (14) having an electrical cathode connection (16), a gas diffusion electrode (18), a first feed connection (20) for supply of carbon dioxide and/or carbon monoxide and a first drain connection (22) for draining of electrolysis substances at least partly formed in the intended operation of the electrochemical cell (10),
- an anode region (26) which is formed separately from the cathode region (14) by means of a separator (24) and has an electrical anode connection (28), an anode plate (50), a second feed connection (32) for supply of a proton-releasing substance and a second drain connection (34) for draining of electrolysis residues at least partly formed in the intended operation of the electrochemical cell (10),
- wherein the cathode connection (16) and the anode connection (28) are designed to be electrically coupled to corresponding electrical connections of an electrical energy source (36) that provides an electrical electrolysis voltage, **characterized in that**
the anode region (26) and the separator (24) are designed as anode-side half-cell (38) as claimed in any of the preceding claims.

12. The electrochemical cell as claimed in claim 11, **characterized in that** the elements of the cathode region and of the anode region (14, 26) are arranged in a stack.

13. An electrolysis device (12) for carbon dioxide electrolysis and/or for carbon monoxide electrolysis, **characterized by** electrochemical cells (10) as claimed in claim 11 or 12, where the electrochemical cells (10) are in a spatially directly adjoining arrangement.

14. A method of producing an anode-side half-cell (38) for an electrochemical cell (10) of an electrolysis device (12) for carbon dioxide electrolysis and/or for carbon monoxide electrolysis, comprising the steps of
- arranging an anode-side separator surface (40) of a separator (24) which is in the form of a membrane and has a cathode-side separator surface (42) on the opposite side from the anode-side separator surface (40) at a first catalyst surface (46) of a catalyst layer (44), which catalyst layer (44) has a second catalyst surface (48) on the opposite side from the first catalyst surface (46), and
- arranging a first anode surface (52) of a fluid-permeable anode plate (50) at the second catalyst surface (48), wherein the second catalyst surface (48) has projections (62) that protrude from this surface and project into the anode plate (50) through the first anode surface (52) for bonding to the anode plate (50).

## Revendications

1. Demi-cellule (38) du côté anodique d'une cellule (10) électrochimique d'un dispositif (12) d'électrolyse pour l'électrolyse du dioxyde de carbone et/ou pour l'électrolyse du monoxyde carbone, comprenant
- un séparateur (24), qui est constitué sous la forme d'une membrane et qui a une surface (40) de séparateur du côté de l'anode et une surface (42) de séparateur du côté de la cathode opposée à la surface (40) de séparateur du côté de l'anode,
- un couche (44) de catalyseur, qui a une première surface (46) de catalyseur et une deuxième surface (48) de catalyseur opposée à la première surface (46) de catalyseur, dans laquelle la première surface (46) de catalyseur est tournée vers la surface (40) de séparateur du côté de l'anode, et
- une plaque (50) d'anode perméable au fluide, qui a une première surface (52) d'anode, dans laquelle la première surface (52) d'anode est tournée vers la deuxième surface (48) de catalyseur,
- dans laquelle la deuxième surface (48) de catalyseur a des saillies (62) en saillie de cette surface, qui, pour la liaison avec la plaque (50) d'anode, pénètre dans la plaque (50) d'anode, en passant à travers la première surface (52) d'anode.

2. Demi-cellule du côté anodique suivant la revendication 1, **caractérisée en ce que** la plaque (50) d'anode a une deuxième surface (54) d'anode opposée à la première surface (52) d'anode, dans laquelle une plaque (56) de contact est disposée sur la deuxième surface (52) d'anode et dans laquelle au moins la plaque (50) d'anode ou la plaque (56) de contact sert à la connexion électrique à une source (36) d'énergie électrique, qui donne un potentiel électrique d'anode.

3. Demi-cellule du côté anodique suivant l'une des revendications précédentes, **caractérisée en ce qu'**au moins la plaque (50) d'anode ou la plaque (56) de contact a du titane ou un alliage de titane.

4. Demi-cellule du côté anodique suivant l'une des revendications précédentes, **caractérisée en ce que** la plaque (50) d'anode est constituée poreuse au moins en partie.

5. Demi-cellule du côté anodique suivant l'une des revendications précédentes, **caractérisée en ce que** la première surface (52) d'anode est reliée au moyen d'une technique de liaison conductrice de l'électricité à la deuxième surface (48) de catalyseur.

6. Demi-cellule du côté anodique suivant la revendication 5, **caractérisée en ce que** la technique de liaison utilise une colle (58, 60) conductrice de l'électricité, la colle (60) ayant, de préférence, des particules en oxyde d'irridium (IV).

7. Demi-cellule du côté anodique suivant l'une des revendications précédentes, **caractérisée en ce que** les saillies (62) sont en le même matériau que la couche (44) de catalyseur.

8. Demi-cellule du côté anodique suivant la revendication 7, **caractérisée en ce que** les saillies (62) sont formées par des tiges (66) disposées à distance les unes des autres et la plaque (50) d'anode, en particulier la première surface (52) d'anode, a des ouvertures (64) de réception des tiges (66).

9. Demi-cellule du côté anodique suivant l'une des revendications 2 à 8 précédentes, **caractérisée en ce que** la plaque (56) de contact a une surface (68) de plaque de contact opposée à la deuxième surface (54) d'anode, qui a des éléments (70) de liaison au moins pour la liaison mécanique de la surface (68) de la plaque de contact à la deuxième surface (54) d'anode.

10. Demi-cellule du côté anodique suivant la revendication 9, **caractérisée en ce que** les éléments (70) de liaison et la plaque (56) de contact sont conducteurs de l'électricité.

11. Cellule (10) électrochimique d'un dispositif (12) d'électrolyse pour l'électrolyse du dioxyde de carbone et/ou pour l'électrolyse du monoxyde de carbone, comprenant
- un compartiment (14) cathodique, qui a une connexion (16) électrique de cathode, une électrode (18) à diffusion de gaz, un premier raccord (20) d'apport pour l'apport de dioxyde de carbone et/ou de monoxyde de carbone et un premier raccord (22) d'évacuation pour l'évacuation de substances d'électrolyse formées au moins en partie lors d'un fonctionnement conforme aux prescriptions de la cellule (10) électrochimique,
- un compartiment (26) anodique, qui est constitué en étant séparé du compartiment (14) cathodique au moyen d'un séparateur (24) et qui a une connexion (28) électrique d'anode, une plaque (50) d'anode, un deuxième raccord (32) d'apport pour l'apport d'une substance cédant des protons, et un deuxième raccord (34) d'évacuation pour l'évacuation de substances résiduelles de l'électrolyse formées au moins en partie lors d'un fonctionnement conforme aux prescriptions de la cellule (10) électrochimique,
- dans laquelle la connexion (16) de cathode et la connexion (28) d'anode sont constituées pour être connectées électriquement à des connexions électriques correspondantes d'une source (36) d'énergie électrique donnant une tension électrique d'électrolyse,
**caractérisée en ce que**
le compartiment (26) anodique et le séparateur (24) sont constitués en demi-cellule (38) du côté anodique suivant l'une des revendications précédentes.

12. Cellule électrochimique suivant la revendication 11, **caractérisée en ce que** les éléments du compartiment (14) cathodique et du compartiment (26) anodique sont disposés en un empilement.

13. Dispositif (12) d'électrolyse pour l'électrolyse du dioxyde de carbone et/ou pour l'électrolyse du monoxyde de carbone, **caractérisé par** des cellules (10) électrochimiques suivant la revendication 11 ou 12, dans lequel les cellules (10) électrochimiques sont disposées en étant immédiatement voisines les unes des autres dans l'espace.

14. Procédé de fabrication d'une demi-cellule (38) du côté de l'anode d'une cellule (10) électrochimique d'un dispositif (12) d'électrolyse pour l'électrolyse du dioxyde de carbone et/ou pour l'électrolyse du monoxyde de carbone, comprenant les stades
- mise d'une surface (40) de séparateur du côté de l'anode d'un séparateur (24) constitué sous la forme d'une membrane, qui a une surface (42) de séparateur du côté de la cathode opposée à la surface (40) de séparateur du côté de l'anode, sur une première surface (46) de catalyseur d'une couche (44) de catalyseur, qui a une deuxième surface (48) de catalyseur opposée à la première surface (46) de catalyseur,
- mise d'une première surface (52) d'anode d'une plaque (50) d'anode perméable au fluide sur la deuxième surface (48) de catalyseur, dans lequel la deuxième surface (48) de catalyseur a des saillies (62), qui sont en saillie de cette surface et qui, pour la liaison avec la plaque (50) d'anode, pénètrent, en traversant la première surface (52) d'anode, dans la plaque (50) d'anode.
